# EUROPEAN PATENT APPLICATION

(11) **EP 2 952 738 A1**
(43) Date of publication of application: **09.12.2015**
(21) Application number: 14171369.3
(22) Date of filing: 05.06.2014
(51) Int. Cl.: F03D 11/00, F03D 1/06

(54) **A root bushing for a blade root of a wind turbine rotor blade, a blade root, a wind turbine rotor blade, a wind turbine and a method for manufacturing a root bushing**

(71) Applicant: Siemens Aktiengesellschaft, 80333 München (DE)
(72) Inventor: Kratmann, Kasper Koops, 8700 Horsens (DK)

(57) **Abstract**

A root bushing (9) for a blade root (8) of a wind turbine rotor blade (5), comprising a bushing body (10) and a corrosion protective layer (15), wherein the corrosion protective layer (15) is provided on a face (14) of the bushing body (10) and wherein the corrosion protective layer (15) is applied to the face (14) in a cold-deforming process.

This has the advantage that due to the fact that the corrosion protective layer is applied in a cold-deforming process, the application of the corrosion protective layer does not influence the mechanical properties of the material of the bushing body.

## Description

A root bushing for a blade root of a wind turbine rotor blade, a blade root, a wind turbine rotor blade, a wind turbine and a method for manufacturing a root bushing

The present invention relates to a root bushing for a blade root of a wind turbine rotor blade, to a blade root, to a wind turbine rotor blade, to a wind turbine and to a method for manufacturing a root bushing.

Modern wind turbine rotor blades are built from fiber-reinforced plastics. A rotor blade typically comprises an airfoil having a rounded leading edge and a sharp trailing edge. The rotor blade is connected with its blade root to a hub of the wind turbine. The blade root comprises a plurality of root bushings. The root bushings can be provided with an internal thread. Bolts are engaged with theses threads to connect the blade root to the hub. EP 1 486 415 A1 describes such a root bushing. The connection between the hub and the root bushings is exposed to environmental influences such as rain and soil and thus to corrosion.

It is one object of the present invention to provide an improved root bushing for a blade root of a wind turbine rotor blade.

Accordingly, a root bushing for a blade root of a wind turbine rotor blade, comprising a bushing body and a corrosion protective layer is provided, wherein the corrosion protective layer is provided on a face of the bushing body and wherein the corrosion protective layer is applied to the face in a cold-deforming process.

In particular, the corrosion protective layer is provided to a front face or distal face of the bushing body. The bushing body preferably is made of "ductile iron". This material has a high impact and fatigue resistance due to its nodular graphite inclusions. One type of this material is the so-called ADI (austempered ductile iron), wherein the metallurgical structure of this material is manipulated through a sophisticated heat treating process. The root bushing is advantageous in that due to the fact that the corrosion protective layer is applied in a cold-deforming process, the application of the corrosion protective layer does not influence the mechanical properties of the ductile iron due to heating the material.

According to an embodiment, the bushing body and the corrosion protective layer are made of different materials. Preferably, the bushing body comprises ductile iron and the protective layer comprises a corrosion resistive material like zinc. Thus, the bushing body and in particular the ductile iron is prevented from corrosion.

According to a further embodiment, the corrosion protective layer is a metal sheet or foil. The metal sheet or foil can be provided with a very uniform thickness. Thus, the corrosion protective layer is provided very even and with a uniform thickness. This improves the reliability and durability of the connection between blade root and hub.

According to a further embodiment, the corrosion protective layer is provided on the face, an outer wall and/or an inner wall of the bushing body. The bushing body is preferably provided with a central bore. This central bore can be provided with an even and uniform layer of corrosion protective material. In contrast to that, the application of a spray or heat galvanized corrosion protective coating is very difficult in relatively small bores like the central bore of the bushing body.

According to a further embodiment, the bushing body is made of a material containing iron. This material has a high impact and fatigue resistance.

Further, a blade root of a wind turbine rotor blade comprising such a root bushing is provided. The blade root preferably comprises a plurality of root bushings which may be arranged in a circular pattern

Further, a wind turbine rotor blade comprising such a root bushing and/or such a blade root is provided.

Further, a wind turbine comprising such a root bushing, such a blade root and/or such a wind turbine rotor blade is comprised.

Further, a method for manufacturing a root bushing for a blade root of a wind turbine rotor is provided. The method comprises the steps of
a) providing a bushing body,
b) providing a corrosion protective layer, and
c) applying the corrosion protective layer to a face of the bushing body in a cold-deforming process.

According to an embodiment, the corrosion protective layer is provided in the form of a metal sheet or foil.

According to a further embodiment, the corrosion protective layer is provided in the form of a circular disc with a central bore. During application of the corrosion protective layer to the face, the material of the corrosion protective layer is plastically deformed and attached to a surface of the bushing body non-releasable.

According to a further embodiment, the corrosion protective layer is applied to the face, an outer wall and/or an inner wall of the bushing body.

According to a further embodiment, the corrosion protective layer is applied to the face of the bushing body by means of a punch. The punch or thorn preferably has an inner pin and an outer ring which surrounds the pin. The pin and the ring are preferably arranged coaxially. In particular, the ring protrudes over the pin.

According to a further embodiment, when applying the corrosion protective layer, the punch meshes with a central bore of the bushing body. Thus, the central bore or the inner wall can be covered with the corrosion protective layer.

According to a further embodiment, when applying the corrosion protective layer, the punch meshes with an outer wall of the bushing body. Thus, the outer wall can be covered with the corrosion protective layer.

"Wind turbine" presently refers to an apparatus converting the wind's kinetic energy into rotational energy, which may again be converted to electrical energy by the apparatus.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 is a perspective view of a wind turbine according to one embodiment;
Fig. 2 is a perspective view of a wind turbine rotor blade according to one embodiment;
Fig. 3 is an end view of the wind turbine rotor blade according to Fig. 2;
Fig. 4 is a sectional view of a root bushing for a root of the wind turbine blade according to Fig. 2;
Fig. 5 is another sectional view of the root bushing according to Fig. 4; and
Fig. 6 shows a block diagram of an embodiment of a method for manufacturing a root bushing for a blade root of a wind turbine rotor blade.

In the Figures, like reference numerals designate like or functionally equivalent elements, unless otherwise indicated.

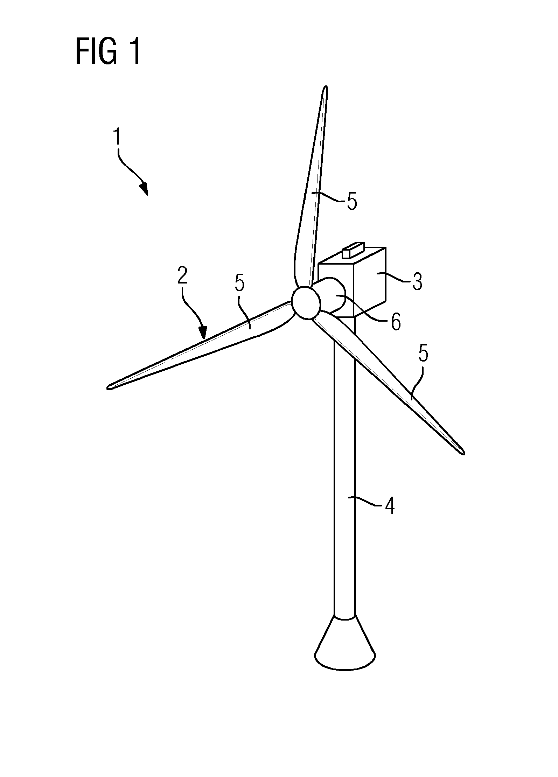

Fig. 1 shows a wind turbine 1 according to an embodiment.

The wind turbine 1 comprises a rotor 2 connected to a generator (not shown) arranged inside a nacelle 3. The nacelle 3 is arranged at the upper end of a tower 4 of the wind turbine 1.

The rotor 2 comprises three blades 5. The blades 5 are connected to a hub 6 of the wind turbine 1. Rotors 2 of this kind may have diameters ranging from, for example, 30 to 160 meters. The blades 5 are subjected to high wind loads. At the same time, the blades 5 need to be lightweight. For these reasons, blades 5 in modern wind turbines 1 are manufactured from fiber-reinforced composite materials. Therein, glass fibers are generally preferred over carbon fibers for cost reasons. Oftentimes, glass fibers in the form of unidirectional fiber mats are used.

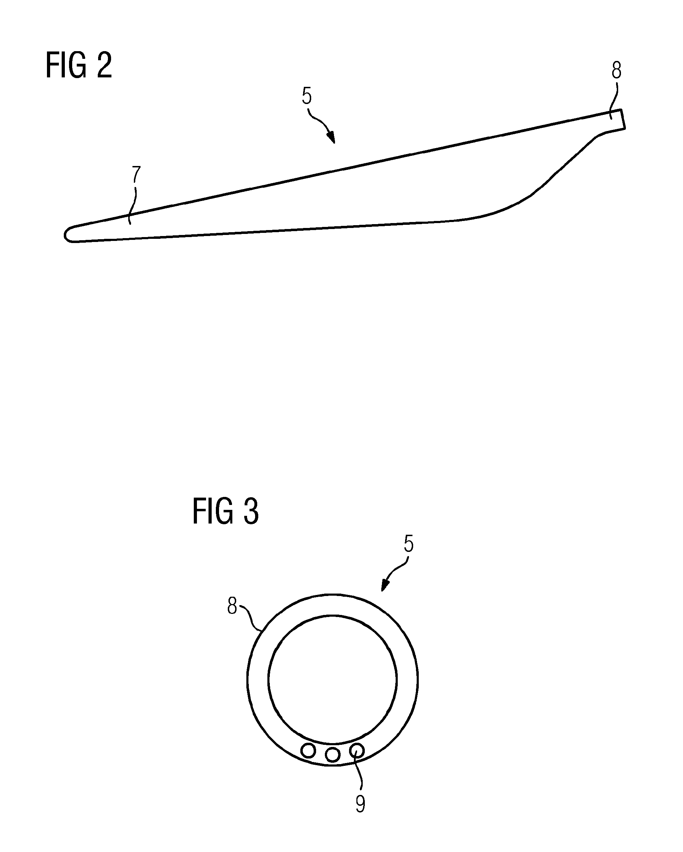

Fig. 2 shows a blade 5 according to one embodiment.

The blade 5 comprises an aerodynamically designed portion 7, which is shaped for optimum exploitation of the wind energy and a blade root 8 for connecting the blade 5 to the hub 6. The blade 5 may be fixed to the hub 6 by means of bolts.

Fig. 3 shows an end view of the blade root 8.

The blade root 8 comprises a plurality of root bushings 9 for a releasable connection of the blade 5 to the hub 6. The root bushings 9 are embedded in the blade root 8 so that bolts (not shown) can be screwed into an internal thread of the root bushings 9 for a firm but releasable engagement therewith. The number of root bushings 9 is arbitrarily. In Fig. 3 only three root bushings 9 are shown.

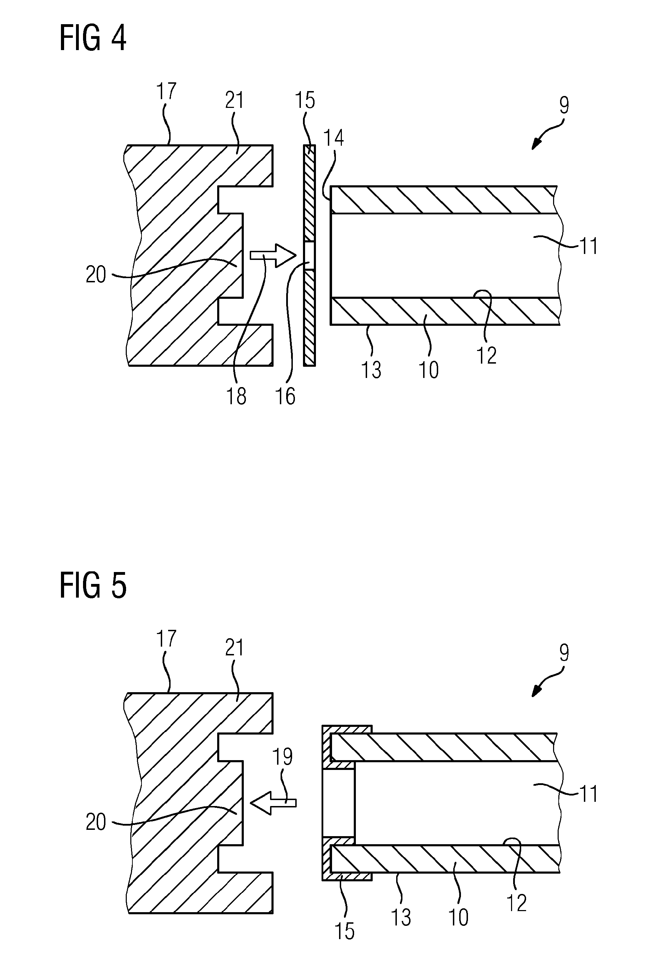

Figs. 4 and 5 are longitudinal sections of a root bushing 9.

In the following, Figs. 4 and 5 are referred to at the same time. The root bushing 9 comprises a bushing body 10. The bushing body 10 preferably has a cylindrical shape with a circular cross section. The bushing body 10 is provided with a central bore 11. The central bore 11 may comprise a thread. Bolts (not shown) can be engaged with the threads of the bushings 9 to connect the blade 5 to the hub 6 of the wind turbine 1.

The bushing body 10 comprises an inner wall 12 and an outer wall 13. The walls 12, 13 are arranged coaxially. Thus, the root bushing body 10 has a tube-shape. The root bushing body 10 further comprises a face 14, preferably a front face 14. With regard to the blade 5, the face 14 is a distal face 14 of the bushing body 10.

The bushing body 10 preferably is made of "ductile iron". This material has a high impact and fatigue resistance due to its nodular graphite inclusions. One type of this material is the so-called ADI, wherein the metallurgical structure of this material is manipulated through a sophisticated heat treating process.

The root bushing 9 comprises a corrosion protective layer 15 which is provided at least on the face 14 of the root bushing body 10. The corrosion protective layer 15 is made of another material than the bushing body 10. The corrosion protective layer 15 comprises a corrosion protection material as zinc, for example. Preferably, the corrosion protective layer 15 has a thickness of less than 1 mm, more preferably between 0.1 and 1 mm, more preferably between 0.1 and 0.8 mm, more preferably between 0.1 and 0.8 mm, more preferably between 0.1 and 0.6 mm and more preferably between 0.1 and 0.4 mm. The corrosion protective layer 15 is applied to the face 14 in a cold-deforming process. In particular, the corrosion protective layer 15 is pressed onto the face 14 with a high force, so that the corrosion protective layer 15 is cold-welded to the face 14.

The corrosion protective layer 15 is preferably provided as a flat metal sheet. As can be seen from Fig. 5, the corrosion protective layer 15 is provided to the front face 14, the inner wall 12 and/or to the outer wall 13 of the bushing body 10.

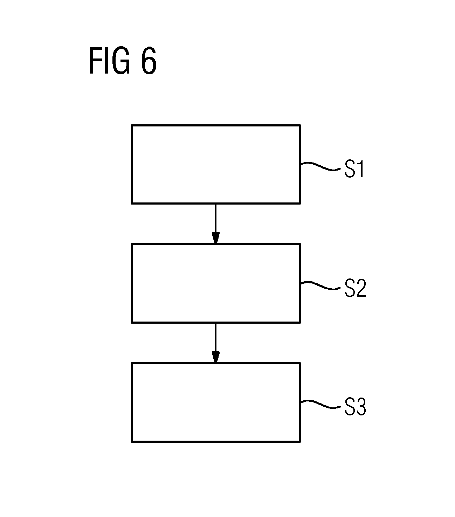

Fig. 6 shows a flow diagram of a method for manufacturing the root bushing 9, according to an embodiment.

In step S1, the root bushing body 10 is provided. In step S2, the corrosion protective layer 15 is provided (see Fig. 4 for steps S1 and S2). The corrosion protective layer 15 is provided in the form of a metal sheet or foil. In particular, the corrosion protective layer is provided in the form of a circular disc with a central bore 16.

In step S3, the corrosion protective layer 15 is applied to the face 14 of the bushing body 10 in a cold-deforming process. The corrosion protective layer 15 is applied to the face 14 by means of a thorn or punch 17. As can be seen in Fig. 4, the corrosion protective layer 15 is placed between the face 14 and the punch 17. The corrosion protective layer 15 may alternatively be laid on the face 14 or the punch 17. The punch 17 is the pressed against the corrosion protective layer 15 with high force to connect the corrosion protective layer 15 with the face 14. The corrosion protective layer 15 is also connected to the walls 12, 13.

The movement of the punch 17 during step S3 is shown by means of arrows 18, 19. Arrow 18 displays the movement of the punch 17 when pressing the corrosion protective layer 15 to the bushing body 10. Arrow 19 displays the movement of the punch 17 when removing the punch from the root bushing 9 after connecting the corrosion protective layer 15 and the bushing body 10. During the application of the corrosion protective layer 15 its material is plastically deformed.

The punch 17 has an inner pin 20 which meshes with the cen-tral bore 11 of the bushing body 10. The punch 17 further has an outer ring 21 which surrounds the pin 20 and which meshes with the outer wall 13 of the bushing body 10. The ring 21 protrudes over the pin 20.

Due to the fact that neither the bushing body 10 nor the corrosion protective layer 15 are heated up during the application of the corrosion protective layer 15 to the bushing body 10, the impact and fatigue resistance properties of the material of the bushing body are not influenced in a negative way. Further, the thickness of the applied corrosion protective layer 15 is very uniform in contrast to other known methods like spray galvanizing. The cold-deforming process has a much shorter cyclus time compared to known spray or heat galvanizing processes. This in turn is cost-effective.

Although the present invention has been described in accordance with preferred embodiments, it is obvious for the person skilled in the art that modifications are possible in all embodiments.

## Claims

1. A root bushing (9) for a blade root (8) of a wind turbine rotor blade (5), comprising a bushing body (10) and a corrosion protective layer (15), wherein the corrosion protective layer (15) is provided on a face (14) of the bushing body (10) and wherein the corrosion protective layer (15) is applied to the face (14) in a cold-deforming process.

2. The root bushing according to claim 1, wherein the bushing body (10) and the corrosion protective layer (15) are made of different materials.

3. The root bushing according to claim 1 or 2, wherein the corrosion protective layer (15) is a metal sheet or foil.

4. The root bushing according to one of claims 1 - 3, wherein the corrosion protective layer (15) is provided on the face (14), an outer wall (13) and/or an inner wall (12) of the bushing body (10).

5. The root bushing according to one of claims 1 - 4, wherein the bushing body (10) is made of a material containing iron.

6. Blade root (8) of a wind turbine rotor blade (5) comprising a root bushing (9) according to one of claims 1 - 5.

7. Wind turbine rotor blade (5) comprising a root bushing (9) according to one of claims 1 - 5 and/or a blade root (8) according to claim 6.

8. Wind turbine (1) comprising a root bushing (9) according to one of claims 1 - 5, a blade root (8) according to claim 6 and/or a wind turbine rotor blade (5) according to claim 7.

9. A method for manufacturing a root bushing (9) for a blade root (8) of a wind turbine rotor blade (5), comprising the steps of
a) providing (S1) a bushing body (10),
b) providing (S2) a corrosion protective layer (15), and
c) applying (S3) the corrosion protective layer (15) to a face (14) of the bushing body (10) in a cold-deforming process.

10. The method according to claim 9, wherein the corrosion protective layer (15) is provided in the form of a metal sheet or foil.

11. The method according to claim 9 or 10, wherein the corrosion protective layer (15) is provided in the form of a circular disc with a central bore (16).

12. The method according to one of claims 9 - 11, wherein the corrosion protective layer (15) is applied to the face (14), an outer wall (13) and/or an inner wall (12) of the bushing body (10).

13. The method according to one of claims 9 to 12, wherein the corrosion protective layer (15) is applied to the face (14) of the bushing body (10) by means of a punch (17).

14. The method according to claim 13, wherein, when applying (S3) the corrosion protective layer (15), the punch (17) meshes with a central bore (11) of the bushing body (10).

15. The method according to claim 13 or 14, wherein, when applying (S3) the corrosion protective layer (15), the punch (17) meshes with an outer wall (13) of the bushing body (10).
